Europäisches Patentamt

(19) European Patent Office

Office européen des brevets

(11) Numéro de publication: **0 211 126**
**B1**

(12) **FASCICULE DE BREVET EUROPEEN**

(45) Date de publication du fascicule du brevet:
05.09.90

(21) Numéro de dépôt: 85402496.5

(22) Date de dépôt: 16.12.85

(51) Int. Cl.⁵: **G08B 19/00**

(54) **Système de mesure de verglas par micro-processeur avec un nouveau mécanisme de dégagement incorporé.**

(30) Priorité: 04.07.85  CA 486319

(43) Date de publication de la demande:
25.02.87 Bulletin 87/9

(45) Mention de la délivrance du brevet:
05.09.90 Bulletin 90/36

(84) Etats contractants désignés:
AT BE CH DE FR GB IT LI LU NL SE

(56) Documents cités:
GB-A- 1 109 691
US-A- 3 541 540

PROCEEDINGS OF THE IEEE 1982 NATIONAL
AEROSPACE AND ELECTRONICS
CONFERENCE, 18-20 mai 1982, vol. 1, pages 100-
104, IEEE, New York, US; B. SCHWARTZ et al.: "Design
of an aircraft ice detector using microcomputer
electronics to enhance system availability" 000

(73) Titulaire: **HYDRO-QUEBEC, 75, Boulevard Dorchester
Ouest, Montréal Québec H2Z 1A4(CA)**

(72) Inventeur: **Provencal, Gilles, 1593 Provence, St-Bruno de
Montarville Québec, J3V 4S4(CA)**
Inventeur: **Cote, Yvon, 3050 Terrasse Abénaquis,
Longueil Québec, J4M 2B3(CA)**

(74) Mandataire: **Bloch, Robert et al, 2, square de l'Avenue
du Bois, F-75116 Paris(FR)**

ACTORUM AG

## Description

La présente invention concerne un système de mesure de verglas par microprocesseur avec nouveau mécanisme de dégagement incorporé. Plus précisément, l'invention se rapporte à un détecteur de verglas permettant d'éliminer les erreurs de mesure d'un système présentement en usage. Il est évident que lorsqu'on parle de verglas ce terme englobe aussi les formations de givre.

Pour un organisme spécialisé dans le transport d'électricité, comme c'est le cas de la société demanderesse, le réseau d'observation des tempêtes de précipitation verglaçante est très important lors de la conception des pylônes et pour la télésurveillance des lignes existantes en temps réel.

L'étude climatique dans un corridor de ligne projeté comprend deux parties aussi importantes l'une que l'autre: l'intensité de l'impact sur les lignes lors d'une tempête de verglas et la fréquence d'un tel événement ou sa probabilité dans le temps. Grâce à l'information recueillie avec l'équipement de détection de verglas, il est possible sur le plan de la conception même des lignes d'avoir une bonne connaissance des risques et de prévoir la diminution de l'étendue et de la durée d'un défaut mécanique lors d'une accumulation sévère de givre ou de verglas. L'observation et l'information obtenue d'un réseau de détection de verglas permet à l'ingénieur de projets de lignes de concevoir la ligne à un niveau de risque fort acceptable du point de vue économique.

Les lignes à haute tension d'une société distributrice d'électricité traversent souvent des zones montagneuses soumises à des conditions climatiques très sévères. Certaines sections des lignes sont plus exposées que d'autres et à quelques occasions le givre et le verglas ont été la cause directe d'effondrements majeurs. En de nombreuses autres occasions, le givre et le verglas ont causé des avaries du câble de garde, bris d'entretoise, rupture du conducteur etc. ce qui produit ou peut produire des pannes importantes.

Dû à l'éloignement de lignes de transport dans des régions isolées de la société demanderesse et aux conditions météorologiques associées aux tempêtes, il devient très difficile d'observer du givre ou verglas et de connaître lors de pluie verglaçante l'amplitude, la durée et la gravité de la tempête ainsi que l'effet sur le comportement de ses lignes.

Idéalement ce lien physique devrait avoir une fiabilité mécanique suffisante pour assurer le transport de l'énergie même lorsque les conditions atmosphériques sont défavorables. Cependant, l'expérience des années antérieures a permis d'identifier certains secteurs où les lignes sont plus vulnérables. Bien qu'une ligne à toute épreuve n'existe pas, plusieurs solutions ont été envisagées pour résoudre le problème. Mise à part le déplacement du tracé des lignes, toutes ces solutions (renforcement, stratégie de reconstruction rapide pour limiter la durée d'indisponibilité de la ligne) n'éliminent pas le risque de défaut dû au verglas et c'est en grande partie pour cette raison que nous avons conçu un réseau d'observation du verglas en temps réel capable de donner l'alerte et d'indiquer la gravité de la situation en cas de tempête de verglas.

Il existe peu d'instruments capables de détecter et/ou de mesurer le verglas. Cependant, des instruments disponibles sur le marché ont été développés surtout pour les besoins de l'aviation.

L'instrument qui était le plus adaptable aux besoins de la société demanderesse et le plus compatible avec son système de télé-transmission s'est avéré être le détecteur de glace de la compagnie Rosemount Instruments Ltd, ci-après appelée le "Rosemount". Ce détecteur de glace fait l'objet du brevet canadien 808.827 émis le 18 mars 1969 à Rosemount Engineering Company Limited ainsi que des brevets U.S. A. 3.277.459 du 4 octobre 1966 et 3.341.835 du 12 septembre 1967, tous deux émis à Rosemount Engineering Company.

La société demanderesse utilise une trentaine de ces appareils et ce depuis 1972, dans le cadre de ses programmes d'observation du verglas pour le réseau 735 kV existant ou futur, ce qui lui a permis d'acquérir une bonne expérience de ce type d'appareil.

Pour résumer l'essentiel du mode de fonctionnement du détecteur de verglas Rosemount, mentionnons que cet instrument comporte une sonde, un réchauffeur et un tube de soutien qui assure la distance nécessaire entre la sonde et la plaque de montage. Le tout est vissé à un boîtier renfermant la partie électronique.

Cet appareil détecte la présence de verglas par la sonde constituée d'une tige ultrasonique qui vibre axialement et dont la fréquence propre décroît à mesure que du verglas s'accumule.

Dès qu'une épaisseur de glace de 0,51 mm (0,02 po) est atteinte, un signal est émis par son interface électronique et un système de dégivrage est mis en marche. Après sept (7) secondes, l'accumulation de glace a été fondue par un ensemble d'éléments chauffants à l'intérieur du tube de soutien, le capteur refroidit et l'instrument est prêt à recevoir une nouvelle accumulation de givre ou verglas.

Comme l'appareil Rosemount a été développé pour les besoins de l'aviation, il ne répondait pas parfaitement aux besoins de la société demanderesse. En effet, le dispositif Rosemount s'avère d'une trop grande consommation d'énergie électrique pour être utilisé à partir de sources d'énergie électrique autonomes. D'autre part, la tension électrique utilisée pour le chauffage de la sonde exige 115 Volts CA ce qui est trop élevé si la sonde est utilisée en région isolée. Enfin, l'appareil Rosemount donne souvent des résultats erronés lors de tempête de verglas, lorsqu'il est fixé à un support immobile. Dans ces conditions, on a noté qu'il y avait, après chauffage, la présence de gouttelettes d'eau à la base de la sonde, lesquelles se transforment éventuellement en glace une fois la période d'échauffement terminée. Cette présence de glace à la base de la sonde, crée des fausses mesures et des fausses alarmes, ce qui le rend inefficace du point de vue de fiabilité de l'information produite.

En effet, la goutte d'eau gelée à la base de la sonde produit une augmentation de la fréquence d'oscillation de base, contrairement à une diminution dans le cas d'accumulation de verglas. Comme l'appareil Rosemount utilise une méthode de comparaison analogique qui ne tient pas compte de la polarité des variations de la fréquence de base, les résultats obtenus sont donc erronés dans la condition décrite ci-dessus. Nous appelerons la variation positive de la fréquence de base: Inversion de fréquence.

Il existe donc un besoin réel d'un appareil qui puisse détecter la formation de verglas, et cela avec plus de précision, sans erreurs et ne consommant qu'une faible quantité d'énergie électrique à basse tension.

Afin de surmonter les désavantages des détecteurs mentionnés ci-dessus on peut proposer le système de mesure de verglas enseigné par le document US-A-3 541 540, qui comprend un moyen pour évacuer l'eau formée sur la sonde à la suite de la fonte du verglas résultant de l'échauffement de la sonde, avant qu'une nouvelle quantité définie de verglas ne soit formée et détectée sur la sonde. Toutefois, dans ce système, c'est par la position inclinée de la sonde que l'eau est évacuée, par gravitation. Il en résulte qu'il peut quand même rester quelques gouttelettes, à cause du phénomène de capillarité dit de la goutte d'eau.

La présente invention vise donc à proposer un système de mesure de verglas dans lequel l'évacuation de l'eau est totale.

A cet effet, la présente invention concerne un système de mesure de verglas, comprenant une sonde à détection de verglas, des moyens, reliés à la dite sonde, pour engendrer un signal détectant la formation d'une quantité définie de verglas sur ladite sonde, des moyens qui, en réponse audit signal, provoquent un échauffement suffisant de ladite sonde pour faire fondre le verglas formé sur cette dernière et un moyen pour évacuer l'eau formée sur la sonde à la suite de la fonte du verglas résultant de l'échauffement de ladite sonde, avant qu'une nouvelle quantité définie de verglas ne soit formée et détectée sur ladite sonde, caractérisé par le fait que le moyen pour évacuer l'eau formée sur la sonde comporte un solénoïde et un dispositif permettant au solénoïde de pulser mécaniquement ladite sonde jusqu'à évacuation complète des gouttelettes d'eau de sa surface.

De préférence, la sonde est montée sur un support lequel est agencé pour pivoter à une de ses extrémités et est monté sur une tige. Le lien entre la tige et le support constitue un pivot de façon à ce que le support puisse pivoter en deux points à la suite du coulissement vertical de la tige. Le système comporte aussi un boîtier dans lequel est disposé le solénoïde lequel est associé à la tige de façon à exciter cette dernière et la faire coulisser à la verticale. Cette excitation de la tige fera pivoter le support en ses deux points de pivots, ce qui provoquera en définitive une secousse latérale de la sonde.

Selon une autre réalisation préférée de l'invention, le système comprend une jupe en matériau flexible recouvrant la partie inférieure de la sonde de même que le mécanisme de dégagement constitué par le support, les pivots ainsi que la partie supérieure de la tige, protégeant ces derniers contre la formation de verglas. De préférence, la jupe est en un caoutchouc capable de flexibilité entre environ -40°C et environ +100°C.

Selon une autre réalisation préférée de l'invention, un collet de soutien est posé au sommet du boîtier, et la jupe en caoutchouc est insérée dans ce collet.

Selon une autre réalisation préférée de l'invention, la jupe en caoutchouc est sous forme de cône inversement tronqué dont le sommet est légèrement convexe et dont la surface externe comprend une série de nervures circulaires qui se succèdent depuis la base jusqu'au sommet du cône inversement tronqué. La jupe subit alors les mêmes secousses que la sonde lorsque cette dernière est pulsée sous l'effet du solénoïde. La forme tronconique et les nervures prévues dans la jupe favorisent le bris du verglas éventuellement présent sur la jupe lorsque cette dernière se replie sous l'impulsion du solénoïde.

Selon une autre réalisation préférée de l'invention, le système comprend un décodeur rélié par un oscillateur à la sonde externe comprenant la sonde chauffante ainsi que le mécanisme de dégagement. Le décodeur fait partie intégrante de l'interface de réception. L'interface de réception est reliée, quant à elle à une interface de transmission par un câble triaxial ou coaxial. L'interface de transmission fait partie intégrante d'un système de microprocesseur agissant comme cerveau du système de mesure. L'interface de réception comporte un oscillateur permettant à la sonde de produire un signal et un décodeur capable de déterminer si la sonde doit être chauffée ou excitée selon les besoins. L'interface de transmission permet de traduire les signaux émis par le micro-processeur en direction de la sonde et vice versa.

On peut aussi intégrer au système une mémoire locale, comportant un module d'acquisition de données servant à compiler les résultats dans le cas des stations isolées et non reliées par un système de transmission de données, et/ou en cas de défaillance du système de transmission.

L'invention va maintenant être décrite plus en détail en se référant aux dessins annexés lesquels sont donnés à titre purement illustratif et sans caractère limitatif. Dans les dessins qui illustrent l'invention:

La FIGURE 1 est un schéma d'un montage de l'appareil de mesure incluant le détail de la jupe de caoutchouc;

la FIGURE 2 est une illustration du mécanisme de dégagement;

la FIGURE 3 est une illustration du mécanisme de dégagement en position excitée;

la FIGURE 4 est une illustration du mécanisme ainsi que du collet de la jupe;

la FIGURE 5 est un schéma bloc d'un système de mesure de verglas selon la présente invention;

la FIGURE 6 est un ordinogramme illustrant le programme de mesure des paramètres optionnels et de la fréquence de résonance;

la FIGURE 7 est un ordinogramme illustrant la mesure de la fréquence d'oscillation et le traitement des actions à prendre lors de la détection de verglas; et

la FIGURE 8 est un ordinogramme illustrant le traitement des inversions de fréquence.

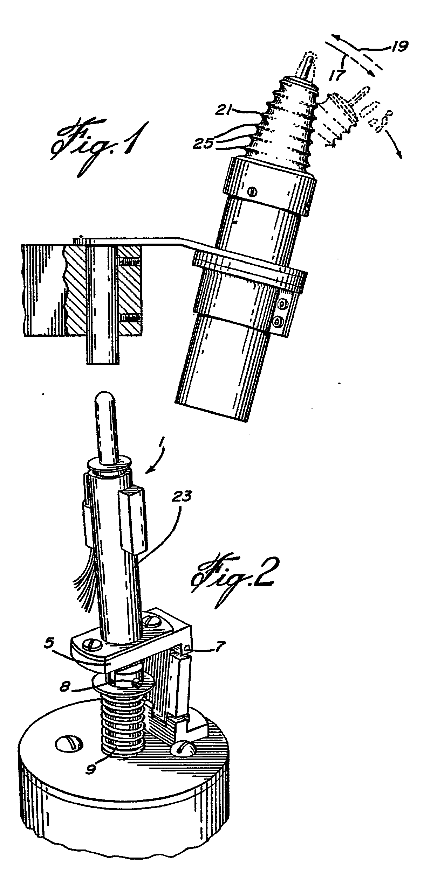

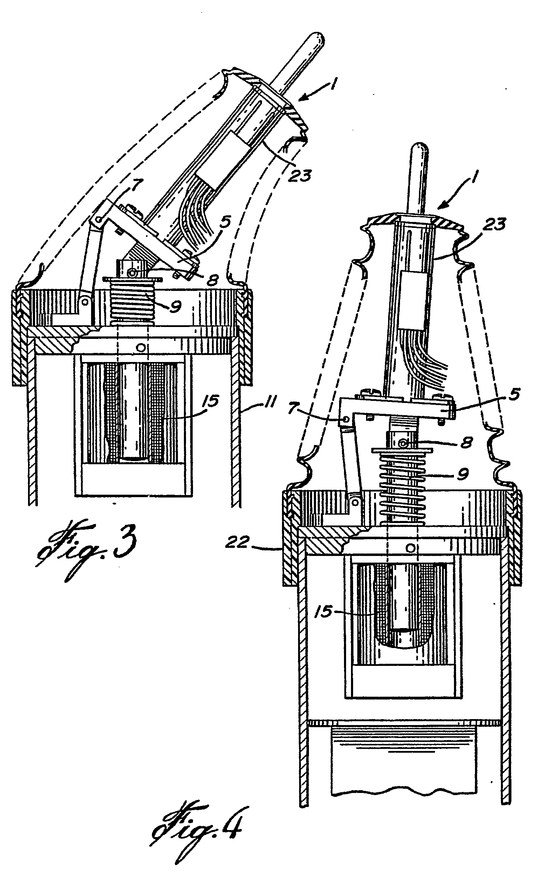

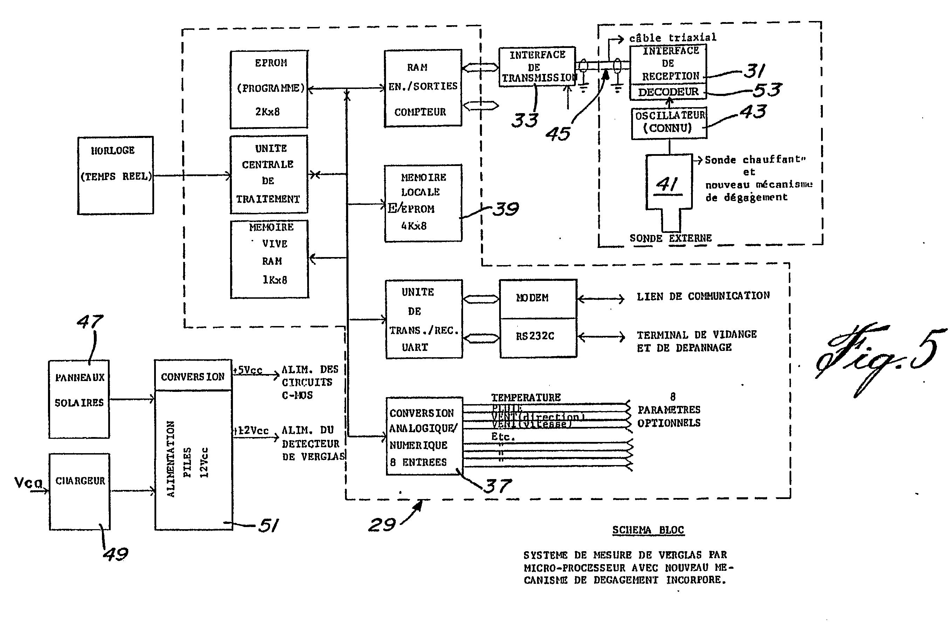

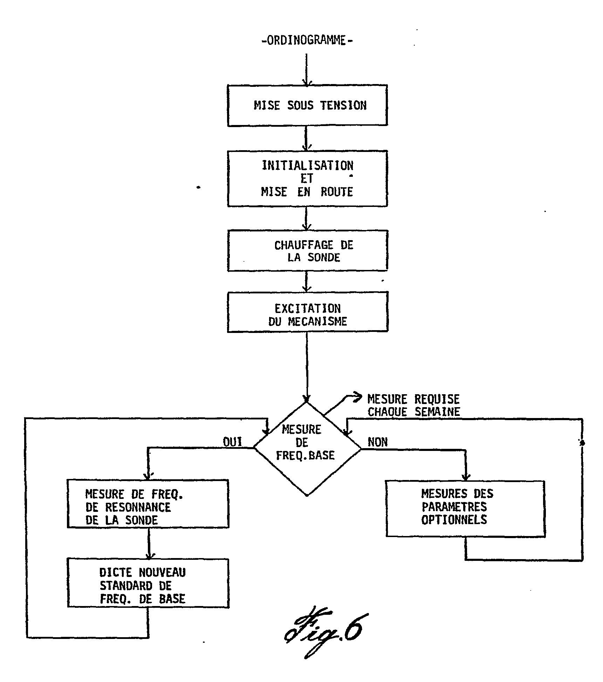

En se référant aux dessins, plus particulièrement aux Figures 1, 2, 3 et 4, on verra qu'un détecteur de verglas selon l'invention comprend une sonde à détection de verglas laquelle se présente sous la forme d'une sonde ultrasonique 1 connue en soi. Cette partie du système de mesure de verglas constituée par la sonde est tout à fait conventionnelle et ne fait pas partie des caractéristiques de l'invention.

Ainsi que nous l'avons expliqué plus haut, lorsqu'il y a eu chauffage de la sonde pour faire fondre le verglas, l'eau s'écoule vers le bas et sous les conditions climatiques normalement en cours lorsqu'il y a possibilité de verglas, de la glace se forme surtout à la base de la sonde, ce qui donnera une fausse lecture.

Pour pallier à cet inconvénient, on a tout d'abord monté la sonde ultrasonique 1 sur un support 5 lequel est agencée pour pivoter en 7 à une de ses extrémités et est montée sur une tige 9. Le lien entre la tige 9 et le support 5 est constitué par un pivot 8 de façon à ce que le support puisse pivoter à la fois en 7 et en 8 à la suite du coulissement vertical de la tige 9. Le système comporte un boîtier 11 dans lequel est disposé un solénoïde 15 lequel est associé de façon connue à la tige 9 de façon à exciter cette dernière et la faire coulisser à la verticale. Cette excitation de la tige 9 fera pivoter le support 5 en 7 et en 8, comme mentionné ci-dessus, ce qui provoquera en définitive une secousse latérale de la sonde 1 dans le sens des flèches 17,19.

La sonde selon l'invention comprend aussi une jupe 21 en forme de cône inversement tronquée dont le sommet est légèrement convexe, ainsi qu'on le voit sur la figure 1. On se rendra compte, en se référant aux dessins, que la jupe est en matériau flexible. On préfère utiliser un caoutchouc capable de flexibilité entre environ -40°C et environ +100°C. La jupe doit recouvrir la partie inférieure 23 de la sonde, de même que le mécanisme de dégagement constitué par le support 5, les pivots 7 et 8 ainsi que la partie supérieure de la tige 9, afin de protéger ces derniers contre la formation de verglas. La jupe 21 s'ajuste autour d'un collet de soutien 22 prévu à la partie supérieure du boîtier.

La surface externe de la jupe 21, comprend une série de nervures circulaires 25 qui se succèdent depuis la base jusqu'au sommet du cône inversement tronqué. On se rendra compte que la jupe subit les mêmes secousses que la sonde lorsque cette dernière est pulsée sous l'effet du solénoïde 15. De plus, il est évident que la forme inversement tronconique et les nervures 25 de la jupe 21 vont favoriser le bris du verglas éventuellement présent sur la jupe 21 lorsque cette dernière se replie sous l'effet de l'impulsion du solénoïde.

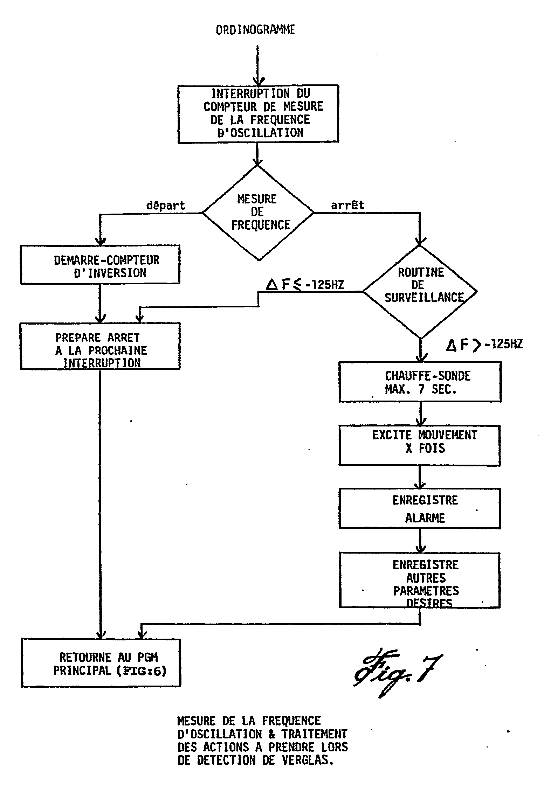

Le système de mesure de verglas selon la présente invention comprend un microprocesseur 29, dont nous allons reparler plus bas. De plus, en se référant à la figure 5, on verra que le système comprend aussi un décodeur 53 relié par un oscillateur 43 à la sonde externe 41 comprenant la sonde chauffante 1 ainsi que le mécanisme de dégagement (5, 7, 8, 9). Le décodeur 53 fait partie intégrante de l'interface de réception 31. L'interface de réception 31 est reliée, quant à elle, à une interface de transmission 33 par un câble triaxial 45. On pourrait évidemment utiliser aussi un câble coaxial, comme cela est connu dans l'état de la technique. De son côté, l'interface de transmission fait partie intégrante d'un système de microprocesseur 29 agissant à titre de cerveau du système de mesure et de commande.

Dans les régions où il est impossible d'avoir accès à une source d'énergie électrique conventionnelle, la source de courant est reliée à un système connu en soi d'alimentation par panneau solaire (ou toute autre forme d'énergie indépendante).

Lorsqu'on a obtenu des données lues par un système de conversion analogique/numérique 37, ces dernières peuvent être transmises par tous moyens connus, notamment par des systèmes de satellite, micro-ondes, lignes téléphoniques, radios, etc. jusqu'à un système de traitement de données, le tout de façon connue.

Le système peut aussi comprendre une mémoire locale 39 intégrée et un module d'acquisition des données non illustré. On se rendra compte que l'intégration d'une mémoire locale servira dans le cas des stations isolées et non reliées par un système de transmission de données. Cette mémoire locale 39 servira aussi en cas de défaillance du système de transmission de données et pourra être lue facilement soit sur le terrain soit au bureau en remplaçant la mémoire locale 39 qui est présente.

Pour une meilleure représentation du système selon l'invention, en dehors du mécanisme de dégagement lui-même, on se référera plus particulièrement aux Figures 5 à 8.

La Figure 5 illustre la sonde ainsi que le microprocesseur qui y est associé. La sonde chauffante ainsi que le mécanisme de dégagement sont illustrés de façon schématique en 41, et on aperçoit aussi l'oscillateur 43 ainsi que l'interface de réception 31 incluant le décodeur 53 et l'interface de transmission 33 tous reliés entre eux ainsi qu'on le voit sur le dessin de la Figure 5, au moyen d'un câble triaxial 45.

Lorsqu'il y a lieu d'utiliser une source de courant indépendante du circuit de distribution électrique conventionnel, on peut recourir à des panneaux solaires 47 et à une alimentation par piles 51. Lorsqu'on utilise une source de courant électrique conventionnelle, on peut recourir à un chargeur 49 et à une alimentation par piles 51.

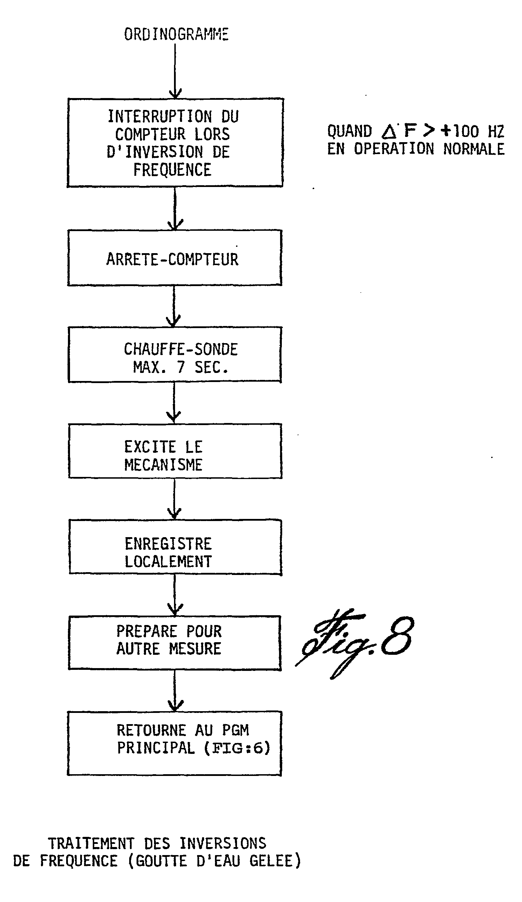

La Figure 6 indique la marche à suivre pour établir un programme de mesure des paramètres optionnels et de la fréquence de base.

Quant à la Figure 7 cette dernière donne la marche à suivre pour la mesure de la fréquence d'oscillation ainsi que le traitement des actions à prendre lors de détection de verglas.

Enfin, lorsqu'il y a inversion de fréquence suite à la formation inattendue d'une goutte d'eau, le traitement effectué pour y remédier est tel qu'illustré en Figure 8.

## Revendications

1. Système de mesure de verglas, comprenant une sonde à détection de verglas (1), des moyens (43), reliés à ladite sonde (1), pour engendrer un signal détectant la formation d'une quantité définie de verglas sur ladite sonde, des moyens (53) qui, en réponse audit signal, provoquent un échauffement suffisant de ladite sonde (1) pour faire fondre le verglas formé sur cette dernière et un moyen (15, 9) pour évacuer l'eau formée sur la sonde (1) à la suite de la fonte du verglas résultant de l'échauffement de ladite sonde (1), avant qu'une nouvelle quantité définie de verglas ne soit formée et détectée sur ladite sonde (1), caractérisé par le fait que le moyen pour évacuer l'eau formée sur la sonde (1) comporte un solénoïde (15) et un dispositif (9, 5, 7, 8) permettant au solénoïde (15) de pulser mécaniquement ladite sonde (1) jusqu'à évacuation complète des gouttelettes d'eau de sa surface.

2. Système de mesure de verglas selon la revendication 1, caractérisé par le fait qu'il comprend un support pivotant (5) sur lequel la sonde (1) est montée, un premier pivot (7) à une extrémité dudit support (5), une tige (9) sur laquelle ledit support (5) est disposé, un second pivot (8) reliant ladite tige (9) audit support pivotant (5), ladite tige (9) étant associée audit solénoïde (15), la partie inférieure de ladite tige (9) ainsi que ledit solénoïde (15) étant enfermé dans un boîtier (11), la partie supérieure de ladite tige (9) pouvant coulisser à la verticale en dehors dudit boîtier (11), ledit solénoïde (15) agissant sur ladite tige (9) pour exciter cette dernière et la faire coulisser à la verticale, faisant en sorte de faire pivoter le support (5) sur les premier et deuxième pivots (7, 8), provoquant en définitive une secousse latérale de ladite sonde (1).

3. Système de mesure de verglas selon la revendication 2, caractérisé par le fait qu'il comprend une jupe (21) en matériau flexible recouvrant la partie inférieure (23) de la sonde, de même que le mécanisme de dégagement constitué par le support pivotant (5), les pivots (7, 8) ainsi que la partie supérieure de la tige (9), protégeant ces derniers contre la formation de verglas.

4. Système de mesure de verglas selon la revendication 3, caractérisé par le fait que la jupe (21) est en caoutchouc capable de flexibilité entre environ -40°C et environ +100°C.

5. Système de mesure de verglas selon la revendication 4, caractérisé par le fait qu'il comprend un collet de soutien (22) posé au sommet du boîtier (11) pour recevoir ladite jupe (21).

6. Système de mesure de verglas selon la revendication 3, caractérisé par le fait que la jupe (21) est sous forme de cône inversement tronqué dont le sommet est légèrement convexe et dont la surface externe comprend une série de nervures circulaires (25) qui se succèdent depuis la base jusqu'au sommet du cône inversement tronqué, ladite jupe (21) subissant les mêmes secousses que ladite sonde (1) lorsque cette dernière est pulsée sous l'effet dudit solénoïde (15), la forme tronconique et lesdites nervures (25) prévues dans ladite jupe (21) favorisant le bris du verglas éventuellement présent sur ladite jupe (21) lorsque cette dernière se replie sous l'impulsion dudit solénoïde (15).

7. Système de mesure de verglas selon la revendication 6, caractérisé en ce que la source de courant (51) alimentant ledit système est reliée à un système de commande (29) dictant successivement l'entrée en opération de l'élément chauffant et du mécanisme de dégagement.

8. Système de mesure de verglas selon la revendication 7, caractérisé en ce que l'alimentation (51) requise par ledit système en est une à bas voltage c.c. (courant continu) et à faible quantité d'énergie électrique (bas wattage).

9. Système de mesure de verglas selon la revendication 7, caractérisé par le fait qu'il comprend un décodeur (53) relié à la sonde externe (41), comportant ladite sonde (1) et ledit mécanisme de dégagement, par un oscillateur (43) ledit décodeur (53) faisant partie intégrante de l'interface de réception (31), l'interface de réception étant reliée à une interface de transmission (33) par un câble triaxial ou coaxial (45), l'interface de transmission (33) faisant partie intégrante d'un système de microprocesseur (29) agissant comme cerveau du système de mesure et de commande.

10. Système de mesure de verglas selon la revendication 9, caractérisé en ce que ladite interface de réception (31) comporte un décodeur (53) permettant à la sonde (1) de produire un signal capable de déterminer si la sonde doit être chauffée ou excitée selon les besoins.

11. Système de mesure de verglas selon la revendication 10, caractérisé par le fait que l'interface de transmission (33) permet de traduire les signaux émis par le microprocesseur (29) en direction de la sonde (1) et du mécanisme de dégagement (9, 5, 7, 8) et vice versa.

12. Système de mesure de verglas selon la revendication 7, caractérisé par le fait que la source de courant (51) alimentant le système est reliée à un système d'alimentation autonome (47) ceci permettant audit système de mesure d'être installé si désiré dans des endroits éloignés et isolés où les sources conventionnelles d'alimentation d'énergie électrique sont inexistantes.

13. Système de mesure de verglas selon la revendication 1, caractérisé par le fait qu'il comprend des moyens pour transmettre les mesures obtenues par le système au moyen d'un système de transmission de données.

14. Système de mesure de verglas selon la revendication 13, caractérisé par le fait que le système de transmission de données est choisi parmi les systèmes : satellite, micro-ondes, lignes téléphoniques, radios.

15. Système de mesure de verglas selon la revendication 1, caractérisé par le fait qu'il comprend une mémoire locale (39) intégrée audit système et comportant un module d'acquisition des données, et servant à compiler les résultats dans le cas de stations isolées et non reliées par un système de transmission de données, et/ou en cas de défaillance du système de transmission.

# Claims

1. System for measuring black ice, comprising a black ice detection probe (1), means (43), connected to said probe (1), for generating a signal detecting the formation of a defined quantity of black ice on said probe, means (53) which, in response to said signal, cause sufficient heating of said probe (1) to cause the black ice formed on the latter to melt and a means (15, 9) for removing the water formed on the probe (1) subsequent to the melting of the black ice resulting from the heating of said probe (1), before a new defined quantity of black ice is formed and detected on said probe (1), characterised in that the means for removing the water formed on the probe (1) comprises a solenoid (15) and a device (9, 5, 7, 8) allowing the solenoid (15) to pulse said probe (1) mechanically until complete removal of the droplets of water on its surface.

2. System for measuring black ice according to claim 1, characterised in that it comprises a pivoting support (5) upon which the probe (1) is mounted, a first pivot (7) at one end of said support (5), a rod (9) upon which said support (5) is disposed, a second pivot (8) connecting said rod (9) to said pivoting support (5), said rod (9) being associated with said solenoid (15), the lower part of said rod (9) as well as said solenoid (15) being contained in a housing (11), the upper part of said rod (9) being able to slide in the vertical direction out of said housing (11), said solenoid (15) acting on said rod (9) to energise the latter and cause it to slide in the vertical direction, thereby causing the support (5) to pivot about the first and second pivots (7, 8), thus finally causing a lateral jolt of said probe (1).

3. System for measuring black ice according to claim 2, characterised in that it comprises a skirt (21) made from flexible material covering the lower part (23) of the probe, as also the disengaging mechanism formed by the pivoting support (5), the pivots (7, 8) as well as the upper part of rod (9), protecting these latter against the formation of black ice.

4. System for measuring black ice according to claim 3, characterised in that the skirt (21) is made of rubber capable of flexibility between approximately −40°C and approximately +100°C.

5. System for measuring black ice according to claim 4, characterised in that it comprises a support collar (22) placed on top of the housing (11) to receive said skirt (21).

6. System for measuring black ice according to claim 3, characterised in that the skirt (21) is in the form of an inversely truncated cone whose vertex is slightly convex and whose external surface contains a series of circular ribs (25) which follow one another from the base up to the vertex of the inversely truncated cone, said skirt (21) being subjected to the same jolts as said probe (1) when the latter is pulsed under the effect of said solenoid (15), the truncated form and said ribs (25) provided in said skirt (21) facilitating the breakage of the black ice that may be present on said skirt (21) when the latter folds up under the impulse of said solenoid (15).

7. System for measuring black ice according to claim 6, characterised in that the current supply (51) supplying said system is connected to a control system (29) governing successively the entry into operation of the heating element and the disengaging mechanism.

8. System for measuring black ice according to claim 7, characterised in that the supply (51) required by said system is one with low voltage d.c. (direct current) and low quantity of electrical energy (low wattage).

9. System for measuring black ice according to claim 7, characterised in that it contains a decoder (53) connected by an oscillator (43) to the external probe (41), containing said probe (1) and said disengaging mechanism, said decoder (53) forming an integral part of the reception interface (31), the reception interface being connected to a transmission interface (33) by a triaxial or coaxial cable (45), the transmission interface (33) forming an integral part of a microprocessor system (29) acting as the brain of the measuring and control system.

10. System for measuring black ice according to claim 9, characterised in that said reception interface (31) contains a decoder (53) allowing the probe (1) to generate a signal capable of determining whether the probe must be heated or energised according to need.

12. System for measuring black ice according to claim 10, characterised in that the transmission interface (33) permits translation of the signals emitted by the microprocessor (29) in the direction of the probe (1) and of the disengaging mechanism (9, 5, 7, 8) and vice versa.

13. System for measuring black ice according to claim 7, characterised in that the current supply (51) supplying the system is connected to an independent supply system (47) which allows said measuring system to be installed, if desired, in distant and isolated locations where the conventional sources of electrical power supply are non-existent.

13. System for measuring black ice according to claim 1, characterised in that it includes means for transmitting the measurements obtained by the system by means of a data transmission system.

14. System for measuring black ice according to claim 13, characterised in that the data transmission system is selected from among the following systems: satellite, microwaves, telephone lines, radios.

15. System for measuring black ice according to claim 1, characterised in that it includes a local memory (39) integrated into said system and including a data acquisition module and serving to compile the results in the case of isolated stations not connected by a data transmission system, and/or in the event of failure of the transmission system.

# Patentansprüche

1. Glatteismeßsystem, bestehend aus einer Glatteismeßsonde (1), aus mit der genannten Sonde (1) verbundenen Vorrichtungen (43) zur Erzeugung eines Signals, welches die Bildung einer definierten Menge Glatteis auf der genannten Sonde erkennt, aus Vorrichtungen (53), welche in Beantwortung des genannten Signals eine ausreichende Erwärmung der genannten Sonde (1) auslösen, um das Glatteis, welches sich auf letzterer gebildet hat, zum Schmelzen zu bringen, und eine Vorrichtung (15, 9), um das Wasser abzuleiten, welches sich auf der Sonde (1) durch das infolge der Erwärmung der genannten Sonde (1) geschmolzene Glatteis gebildet hat, bevor sich eine neue definierte Menge Glatteis auf der genannten Sonde (1) bildet und erkannt wird, dadurch gekennzeichnet, daß die Vorrichtung zum Ableiten des Wassers, das sich auf der Sonde (1) gebildet hat ein Solenoid (Hubmagnet) (15) umfaßt und eine Vorrichtung (9, 5, 7, 8), welche es dem Solenoid ermöglicht, die genannte Sonde (1) mechanisch zu pulsen bis zur vollständigen Entfernung der Wassertröpfchen von ihrer Oberfläche.

2. Glatteismeßsystem gemäß Anspruch 1, dadurch gekennzeichnet daß es eine drehbare Halterung (5) umfaßt, auf welcher die Sonde (1) montiert ist, einen ersten Drehzapfen (7) an einem Ende der genannten Halterung (5), einen Schaft (9), auf welchem die genannte Halterung (5) sitzt, einen zweiten Drehzapfen (8), welcher den genannten Schaft (9) mit der genannten drehbaren Halterung (5) verbindet, wobei der genannte Schaft (9) mit dem genannten Solenoid (15) verbunden ist, der untere Teil des genannten Schaftes (9) sowie das genannte Solenoid (15) in einem Gehäuse (11) eingeschlossen sind, der obere Teil des genannten Schaftes (9) außerhalb des genannten Gehäuses (11) senkrecht gleiten kann, wobei das genannte Solenoid (15) auf den genannten Schaft (9) wirkt, um letzteren zu erregen und ihn senkrecht gleiten zu lassen, sodaß sich die Halterung (5) um den ersten und den zweiten Drehzapfen (7, 8) dreht, wodurch schließlich eine seitliche Erschütterung der genannten Sonde (1) ausgelöst wird.

3. Gleiteismeßsystem gemäß Anspruch 2, dadurch gekennzeichnet, daß es einen Mantel (21) aus elastischem Material umfaßt, welcher den unteren Teil (23) der Sonde umschließt, sowie den aus der drehbaren Halterung (5), den Drehzapfen (7, 8), sowie dem oberen Teil des Schaftes (9) bestehenden Auslösemechanismus, wodurch letztere gegen die Bildung von Glatteis geschützt werden.

4. Glatteismeßsystem gemäß Anspruch 3, dadurch gekennzeichnet, daß der Mantel (21) aus Gummi besteht, welcher elastische Fähigkeiten zwischen ca. –40°C und ca. +100°C aufweist.

5. Glatteismeßsystem gemäß Anspruch 4, dadurch gekennzeichnet, daß es mit einem Halteflansch (22) ausgerüstet ist, welcher am Kopf des Gehäuses (11) sitzt zur Aufnahme des genannten Mantels (21).

6. Glatteismeßsystem gemäß Anspruch 3, dadurch gekennzeichnet, daß der Mantel (21) die Form eines umgekehrten Kegelstumpfes hat, dessen Scheitel leicht konvex ist und dessen Außenfläche eine Reihe kreisförmiger Rippen (25) aufweist, welche von der Grundlinie bis zum Scheitel des umgekehrten Kegelstumpfes aufeinanderfolgen, wobei der genannte Mantel (21) den gleichen Erschütterungen unterliegt wie die genannte Sonde (1), wenn letztere unter Einwirkung des genannten Solenoids (15) gepulst wird, wobei die kegelstumpfartige Form und die genannten, in dem genannten Mantel (21) vorgesehenen Rippen (25) das Brechen von auf dem genannten Mantel (21) eventuell vorhandenem Glatteis begünstigen, wenn sich der Mantel unter den Stößen des genannten Solenoids (15) zusammenzieht.

7. Glatteismeßsystem gemäß Anspruch 6, dadurch gekennzeichnet, daß die Stromquelle (51), welche das genannte System speist, an ein Steuersystem (29) angeschlossen ist, welches nacheinander das Inbetriebgehen des Heizelements und des Auslösemechanismus bestimmt.

8. Glatteismeßsystem gemäß Anspruch 7, dadurch gekennzeichnet, daß die für das System notwendige Versorgung (51) eine Niedrigspannungsversorgung Gleichstrom mit geringem Leistungsverbrauch ist.

9. Glatteismeßsystem gemäß Anspruch 7, dadurch gekennzeichnet, daß es einen über einen Oszillator (43) mit der Außensonde (41) verbundenen Dekodierer (53) umfaßt, welcher die genannte Sonde (1) und den genannten Auslösemechanismus enthält, wobei der genannte Dekodierer (53) ein integrierender Bestandteil der Empfangsschnittstelle (31) ist, wobei die Empfangsschnittstelle über ein Triaxial- oder Koaxialkabel (45) mit einer Übertragungsschnittstelle (33) verbunden ist, wobei die Übertragungsschnittstelle (33) integrierender Bestandteil eines Systems auf Basis eines Mikroprozessors ist, welcher das Gehirn des Meß- und Steuersystems darstellt.

10. Glatteismeßsystem gemäß Anspruch 9, dadurch gekennzeichnet, daß die genannte Empfangsschnittstelle (31) einen Dekodierer (53) enthält, welcher es der Sonde (1) ermöglicht, ein Signal zu erzeugen, welches geeignet ist, festzustellen, ob die Sonde je nach Bedarf erwärmt oder erregt werden soll.

11. Glatteismeßsystem gemäß Anspruch 10, dadurch gekennzeichnet, daß durch die Übertragungsschnittstelle (33), die vom Mikroprozessor (29) in Richtung Sonde (1) und Auslösemechanismus (9, 5, 7, 8) und umgekehrt gesendeten Signals umgesetzt werden können.

12. Glatteismeßsystem gemäß Anspruch 7, dadurch gekennzeichnet, daß die das System speisende Stromquelle (51) mit einem unabhängigen Versorgungssystem (47) verbunden ist, welches es ermöglicht, das genannte Meßsystem, wenn gewünscht, an entfernten und entlegenen Stellen zu installieren, wo keine konventionellen Stromversorgungsquellen existieren.

13. Glatteismeßsystem gemäß Anspruch 1, dadurch gekennzeichnet, daß es Vorrichtungen umfaßt, um die vom System erhaltenen Meßwerte mittels eines Datenübertragungssystems zu übertragen.

14. System des Glatteismessens gemäß Anspruch 13, dadurch gekennzeichnet, daß das Datenübertragungssystem aus folgenden Systemen ausgewählt wird: Satellit, Microwellen, Telephonleitungen, Funk.

15. Glatteismeßsystem gemäß Anspruch 1, dadurch gekennzeichnet, daß es einen in das genannte System integrierten und ein Datenerfassungsmodul enthaltenden lokalen Speicher (39) umfaßt, welcher dazu dient, die Resultate bei nicht über einem Datenübertragungssystem verbundenen Einzelstationen und/oder im Falle eines Ausfalls des Übertragungssystems zu kompilieren.

*Fig.1*

*Fig.2*

**Fig. 3**

**Fig. 4**

SCHEMA BLOC

SYSTEME DE MESURE DE VERGLAS PAR MICRO-PROCESSEUR AVEC NOUVEAU MECANISME DE DEGAGEMENT INCORPORE.

Fig. 5

EP 0 211 126 B1

-ORDINOGRAMME-

```
                    ┌─────────────────────┐
                    │  MISE SOUS TENSION  │
                    └─────────────────────┘
                               │
                    ┌─────────────────────┐
                    │   INITIALISATION    │
                    │         ET          │
                    │   MISE EN ROUTE     │
                    └─────────────────────┘
                               │
                    ┌─────────────────────┐
                    │    CHAUFFAGE DE     │
                    │     LA SONDE        │
                    └─────────────────────┘
                               │
                    ┌─────────────────────┐
                    │     EXCITATION      │
                    │   DU MECANISME      │
                    └─────────────────────┘
                               │
```

MESURE REQUISE
CHAQUE SEMAINE

```
                    ◇ MESURE ◇
              OUI   ◇   DE   ◇   NON
                    ◇FREQ.BASE◇
```

┌─────────────────────┐                    ┌─────────────────────┐
│   MESURE DE FREQ.   │                    │    MESURES DES      │
│   DE RESONNANCE     │                    │    PARAMETRES       │
│   DE LA SONDE       │                    │    OPTIONNELS       │
└─────────────────────┘                    └─────────────────────┘

┌─────────────────────┐
│   DICTE NOUVEAU     │
│   STANDARD DE       │
│   FREQ. DE BASE     │
└─────────────────────┘

*Fig.6*

EP 0 211 126 B1

ORDINOGRAMME

```
        ┌──────────────────────┐
        │   INTERRUPTION DU     │
        │ COMPTEUR DE MESURE    │
        │  DE LA FREQUENCE      │
        │   D'OSCILLATION       │
        └──────────────────────┘
```

MESURE DE FREQUENCE

départ — arrêt

DEMARRE-COMPTEUR D'INVERSION

ROUTINE DE SURVEILLANCE

$\Delta F \leq$ -125HZ

$\Delta F >$ -125HZ

PREPARE ARRET A LA PROCHAINE INTERRUPTION

CHAUFFE-SONDE MAX. 7 SEC.

EXCITE MOUVEMENT X FOIS

ENREGISTRE ALARME

ENREGISTRE AUTRES PARAMETRES DESIRES

RETOURNE AU PGM PRINCIPAL (FIG:6)

*Fig. 7*

MESURE DE LA FREQUENCE D'OSCILLATION & TRAITEMENT DES ACTIONS A PRENDRE LORS DE DETECTION DE VERGLAS.

EP 0 211 126 B1

ORDINOGRAMME

```
        │
        ▼
┌─────────────────┐
│ INTERRUPTION DU │        QUAND △F > +100 HZ
│  COMPTEUR LORS  │        EN OPERATION NORMALE
│ D'INVERSION DE  │
│    FREQUENCE    │
└─────────────────┘
        │
        ▼
┌─────────────────┐
│ ARRETE-COMPTEUR │
└─────────────────┘
        │
        ▼
┌─────────────────┐
│  CHAUFFE-SONDE  │
│   MAX. 7 SEC.   │
└─────────────────┘
        │
        ▼
┌─────────────────┐
│    EXCITE LE    │
│    MECANISME    │
└─────────────────┘
        │
        ▼
┌─────────────────┐
│   ENREGISTRE    │
│   LOCALEMENT    │
└─────────────────┘
        │
        ▼
┌─────────────────┐
│  PREPARE POUR   │        𝓕𝓲𝓰.8
│  AUTRE MESURE   │
└─────────────────┘
        │
        ▼
┌─────────────────┐
│  RETOURNE AU PGM│
│ PRINCIPAL (FIG:6)│
└─────────────────┘
```

TRAITEMENT DES INVERSIONS
DE FREQUENCE (GOUTTE D'EAU GELEE)